# EUROPÄISCHE PATENTSCHRIFT

(11) **EP 1 900 961 B1**
(45) Veröffentlichungstag und Bekanntmachung des Hinweises auf die Patenterteilung: **23.11.2011**
(21) Anmeldenummer: 07012769.1
(22) Anmeldetag: 29.06.2007
(51) Int. Cl.: F16D 65/12

(54) **Bremsscheibe und Verfahren zur Herstellung der Bremsscheibe**
Brake disc and method for manufacturing the brake disc
Disque de frein et procédé destiné à la fabrication du disque de frein

(30) Priorität: 15.09.2006 DE 102006043415
(43) Veröffentlichungstag der Anmeldung: 19.03.2008
(73) Patentinhaber: AUDI AG, 85045 Ingolstadt (DE)
(72) Erfinder: Waninger, Robert, 85055 Ingolstadt (DE); Zupan, Nikola, 85104 Pförring (DE); Rosenlöcher, Jens, 86161 Augsburg (DE)
(74) Vertreter: Asch, Konrad

(56) Entgegenhaltungen:
- EP-A- 1 369 403
- DE-A1- 19 824 465
- DE-C1- 4 438 455
- DE-C1- 19 719 634

## Beschreibung

Die Erfindung betrifft eine Bremsscheibe nach dem Oberbegriff des Patentanspruches 1 sowie ein Verfahren zur Herstellung einer Bremsscheibe, siehe DE-C-44 38 455 (Fig.8).

Die Bremsscheibe einer Scheibenbremse eines Fahrzeugs ist üblicherweise mit der Fahrzeugnabe verschraubt und wirkt mit Bremsbelägen eines Bremssattels zusammen. Aufgrund der hohen Anpresskräfte bei kleiner Bremsbelagfläche ergibt sich eine große Wärmebelastung der Bremsscheibe. Deswegen können sehr hoch beanspruchte Bremsscheiben mit radialen Hohlräumen versehen sein. Durch den in die Hohlräume gelangenden Fahrtwind erfolgt eine Kühlung der Bremsscheibe.

Eine solche Bremsscheibe ist aus der DE 202 21 132 U1 bekannt, bei der eine ringförmige Bremsscheibe an einem Bremsscheibentopf gehaltert ist. Die Bremsscheibe kann aus Guss, einem Keramikmaterial oder aus einem faserverstärkten Verbundkeramikmaterial hergestellt sein. Eine Keramik-Bremsscheibe kann gemäß dem in der DE 101 61 218 A1 beschriebenen Verfahren hergestellt werden. Zunächst wird ein faserverstärktes Roh-Keramikmaterial in eine gewünschte Form gepresst und ausgehärtet. Anschließend wird das Rohteil karbonisiert. Die Porenstruktur des karbonisierten Rohteils wird in einem Silizierschritt mit einer Siliziumschmelze bei Temperaturen um etwa 1600°C infiltriert, wodurch das flüssige Silizium mit dem Kohlenstoff im Rohteil zu Siliziumkarbid reagiert. Aufgrund der hohen Härte des dabei entstehenden Siliziumkarbid-Materials lässt sich die Keramik-Bremsscheibe anschließend nur mit Diamant-Werkzeugen nachbearbeiten.

Die bei den Bremsscheiben gebildeten Körperkanten zwischen den Reibflächen und den darin eingearbeiteten Hohlräumen führen zu einem erhöhten ungleichmäßigen Bremsbelagverschleiß sowie zu Geräuschproblemen während des Bremsvorgangs.

Die Aufgabe der Erfindung besteht darin, eine Bremsscheibe sowie ein Verfahren zur Herstellung einer Bremsscheibe bereitzustellen, bei dem der Bremsbelagverschleiß und Geräuschprobleme während des Bremsvorgangs reduziert sind.

Die Aufgabe der Erfindung ist durch die Merkmale des Patentanspruches 1 oder des Patentanspruches 10 gelöst. Vorteilhafte Weiterbildungen ergeben sich aus den Unteransprüchen.

Gemäß dem kennzeichnenden Teil des Patentanspruches 1 sind die Körperkanten zwischen den radialen Hohlräumen und den Reibflächen der Bremsscheibe mit einer Fase angefast. Dadurch werden die herstellungsbedingt oftmals scharfkantigen Körperkanten zwischen den Hohlräumen und den Reibflächen durch glatte Übergänge ersetzt. Entsprechend reduziert bzw. vergleichmäßigt sich der Bremsbelagverschleiß und wird die Geräuschentwicklung während des Bremsvorgangs deutlich reduziert.

Die Anfasung der Körperkanten erfolgt in einem Rohzustand der Bremsscheibe vor dem Silizier-Herstellungsschritt, bei dem die Porenstruktur des Bremsscheiben-Rohteils mit Silizium infiltriert wird. Das Bremsscheiben-Rohteil ist - im Vergleich zu der, nach dem Silizier-Schritt aus Siliziumkarbid bestehenden Keramik-Bremsscheibe - weniger hart und entsprechend einfacher mit konventionellem Werkzeug zu bearbeiten. Im Gegensatz dazu müssten die Körperkanten der Keramik-Bremsscheibe nach dem Silizier-Schritt mittels eines teuren DiamantWerkzeug nachbearbeitet werden.

Die in die Keramik-Bremsscheibe eingearbeitete Fase ist mit einer Siliziumschicht bzw. einem Siliziumguss überzogen, mit dem ein noch abgerundeter Übergang zwischen den radialen Hohlräumen und den Reibflächen bereitstellbar ist. Dadurch, daß die Anfasung der Körperkanten vor dem Silizieren im Rohzustand erfolgt, bildet sich die Siliziumschicht durch Siliziummaterial, das vorzugsweise während des Silizierschrittes aus den Kapillaröffnungen des Bremsscheiben-Rohteils austritt oder auf der Oberfläche des Bremsscheiben-Rohteils verbleibt.

Bevorzugt ist es, wenn die Senktiefe der Fase in einer Größenordnung von 0,5 bis 5 mm liegt. Dadurch ist gewährleistet, dass auch nach einem verschleißbedingten Materialabtrag an den Reibflächen der Bremsscheibe ein glatter Übergang zwischen den Hohlräumen und den Reibflächen verbleibt. Bevorzugt ist es, wenn ein zwischen der Fase und der Reibfläche der Bremsscheibe eingeschlossener Fasenwinkel zwischen 65° und 30°, bevorzugt bei 45° liegt, um den Übergang zwischen den Hohlräumen und den Reibflächen möglichst glatt zu gestalten. Durch den Fasenwinkelbereich bis zu 65°, bevorzugt bis zu 45°, ist gewährleistet, dass während des Silizierschritts die gebildete, flüssige Siliziumschicht nicht in den Hohlraum abläuft und diesen zusetzt, sondern in etwa gleichmäßig die Fasenfläche überzieht. Die Gefahr, dass sich Hohlräume durch das flüssige Silizium zusetzen, besteht insbesondere bei Hohlräumen mit kleinerem Durchmesser bzw. kleinerer Breite.

Dadurch, dass die Anfasung bereits im Rohteil der Keramik-Bremsscheibe erfolgt, ist der Rohteil-Fasenwinkel kleiner als der tatsächliche Fasenwinkel der fertig bearbeiteten Keramik-Bremsscheibe zu dimensionieren. Dies liegt darin begründet, dass die sich im Silizierschritt bildende Siliziumschicht im Übergangsbereich der Fase zu der Reibfläche verstärkt ansammelt, wodurch der tatsächliche Fasenwinkel gegenüber dem Rohteil-Fasenwinkel erhöht ist. Bei einem bevorzugten tatsächlichen Fasenwinkel von 40° ist somit beispielhaft der Rohteil-Fasenwinkel auf ca. 30° einzustellen.

Die oben beschriebene Geometrie der Fase lässt sich bevorzugt bei einer üblichen Breite bzw. einem Durchmesser der Hohlräume zwischen 2 mm und 10 mm, vorzugsweise 5-7 mm anwenden, ohne dass die beim Silizierschritt entstehende Siliziumschicht in den Hohlraum fließt und diesen zusetzt. Bevorzugt kann sich dabei die Fase im Seitenquerschnitt linear, d. h. plan ohne Krümmung erstrecken. Dadurch wird erreicht, dass sich die, die Fase überziehende Siliziumschicht in etwa gleichmäßig über die Fasenfläche verteilt.

Nachfolgend ist ein Ausführungsbeispiel der Erfindung anhand der beigefügten Figuren beschrieben. Es zeigen:
- Fig. 1: in einem vergrößerten Ausschnitt in Seitenschnittansicht eine Keramik-Bremsscheibe;
- Fig. 2: ein Bremsscheiben-Rohteil in einer der Fig. 1 entsprechenden Ansicht;
- Fig. 3: das Bremsscheiben-Rohteil mit angefasten Körperkanten; und
- Fig. 4: die Keramik-Bremsscheibe der Fig. 2 nach einem Silizier-Herstellungsschritt und vor einem Endbearbeitungsschritt.

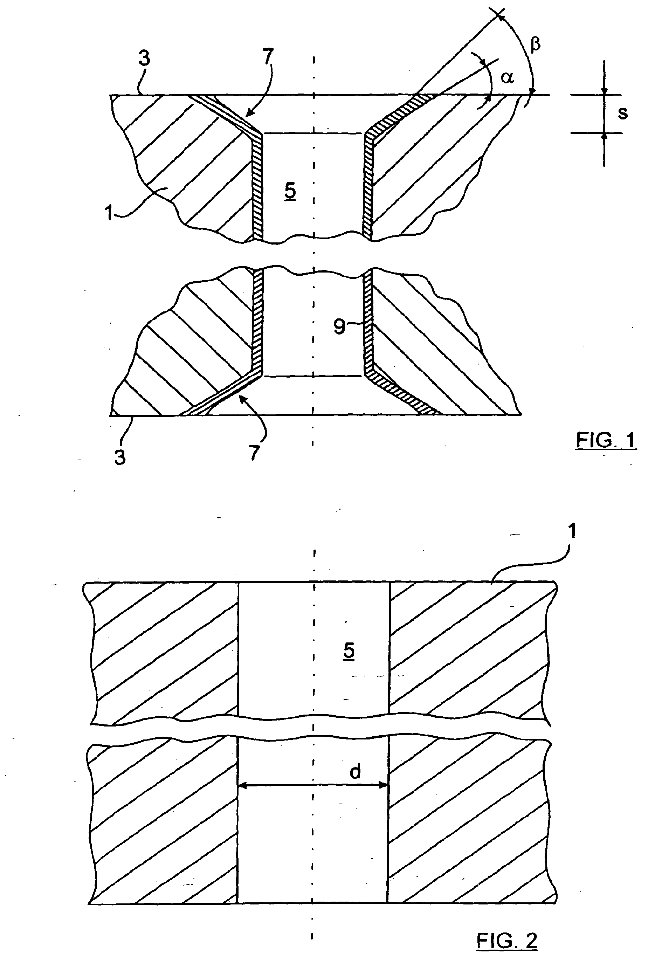

In der Fig. 1 ist ausschnittsweise eine Keramik-Bremsscheibe 1 dargestellt, die in üblicher Weise mit einer Fahrzeugnabe verschraubbar ist und deren Reibflächen 3 mit gegenüberliegenden Bremsbelägen eines Bremssattels zusammenwirken. Um die aufgrund hoher Anpresskräfte während des Bremsvorganges auftretende große Wärmebelastung der Bremsscheibe 1 zu reduzieren, weist diese eine Reihe von radialen Hohlräumen auf, die gemäß der Fig. 1 beispielhaft als Perforationsbohrungen 5 gestaltet sind. Die Perforationsbohrungen 5 der Bremsscheibe 1 werden vom Fahrtwind durchströmt, wodurch die Bremsscheibe 1 während des Bremsvorganges und danach zusätzlich gekühlt wird.

Die in der Fig. 1 gezeigte Keramik-Bremsscheibe 1 besteht aus Siliziumkarbid mit entsprechend großer Materialhärte und Verschleißfestigkeit.

Die Körperkanten zwischen den Reibflächen 3 und der Perforationsbohrung 5 sind mit einer Fase 7 angefast, die zusammen mit der Reibfläche 3 einen Fasenwinkel β von 40° einschließt. Die Senktiefe s beträgt dabei ca. 2 mm. Um eine ausreichend gute Kühlwirkung zu erzielen, liegt der Durchmesser d der Perforationsbohrung 5 in einer Größenordnung zwischen 2 und 10 mm.

Wie aus der Fig. 1 hervorgeht, erstrecken sich die in den Reibflächen 3 der Bremsscheibe 1 eingearbeiteten Fasen 7 im Seitenquerschnitt linear, so dass sich jede Fase 7 rotationssymmetrisch nach Art eines Kegelstumpfes um die Mittelachse der Perforationsbohrung 5 erstreckt. Dabei ist die Fasenfläche zusammen mit der Innenwandung der Perforationsbohrung 5 von einer Siliziumschicht 9 überzogen, die den Übergang zwischen den Fasen 7 und den Reibflächen noch weicher gestaltet.

Aufgrund des erfindungsgemäß glatten Übergangs zwischen der Perforationsbohrung 5 und den Reibflächen 3 der Keramik-Bremsscheibe 1 wird im Vergleich zu scharfkantigen Körperkanten der Bremsbelagverschleiß reduziert bzw. vergleichmäßigt. Darüber hinaus wird die Geräuschentwicklung während des Bremsvorganges, etwa Schlaggeräusche, deutlich reduziert.

Nachfolgend ist anhand der Fig. 2 bis 4 das Verfahren zur Herstellung der in der Fig. 1 gezeigten Keramik-Bremsscheibe beschrieben. Demzufolge wird zunächst aus einem faserverstärkten Verbundkeramikmaterial in einem Presswerkzeug ein Rohteil geformt und bei etwa 180°C ausgehärtet, um das Rohteil zu stabilisieren. Anschließend wird das Bremsscheiben-Rohteil bei 900°C karbonisiert. In der Fig. 2 ist ein solches bereits karbonisiertes Bremsscheiben-Rohteil gezeigt, das annähernd auf die Endabmessungen des Endproduktes bearbeitet ist und in dem bereits die Perforationsbohrungen 5 eingearbeitet sind.

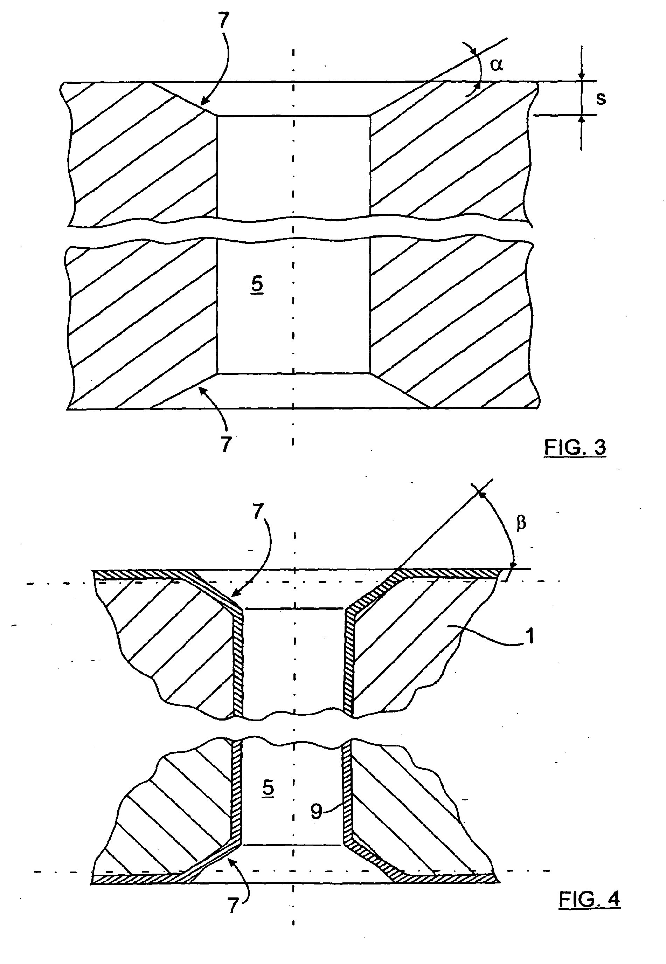

Wie aus der Fig. 3 hervorgeht, erfolgt anschließend mittels eines Senkwerkzeugs die Anfasung der scharfkantigen Körperkanten zwischen der gezeigten Perforationsbohrung 5 und den Reibflächen 3. Der Rohteil-Fasenwinkel α liegt dabei bei etwa 30°.

Nach erfolgter Anfasung der Körperkanten des Bremsscheiben-Rohteils wird die Porenstruktur des Rohteils in einem folgenden Silizier-Schritt mit schmelzflüssigem Silizium bei einer Temperatur über 1400°C infiltriert. Dabei reagiert das flüssige Silizium mit im Bremsscheiben-Rohteil enthaltenem Kohlenstoff zu Siliziumkarbid. Das während des Silizier-Schrittes aus den Kapillaröffnungen des Bremsscheiben-Rohteils austretende Silizium bzw. das währenddessen auf der Oberfläche des Bremsscheiben-Rohteils verbleibende Silizium bildet dabei einen festen Siliziumguss bzw. eine feste Siliziumschicht 9, die gemäß der Fig. 4 die Oberfläche der Bremsscheibe 1 vollständig überzieht.

Die Geometrie der Fasen 7 ist derart gewählt, dass die während des Silizier-Schrittes noch flüssige Siliziumschicht 9 nicht von der Fasenfläche in die Innenwandung der Perforationsbohrung 5 abläuft. Ein solches Ablaufen des flüssigen Siziliums würde insbesondere bei Perforationsbohrungen 5 geringeren Durchmessers dazu führen, dass sich diese zusetzen bzw. verstopfen. Vielmehr kommt es gemäß der Fig. 4 aufgrund des flachen Rohteil-Faserwinkels α von ca. 30° zu einer Materialansammlung von Silizium im Übergangsbereich zwischen den Fasenflächen und den Reibflächen 3 mit gesteigerter Schichtdicke der Siliziumschicht 9. Diese führt zu einem entsprechend erhöhten tatsächlichen Fasenwinkel β. Gemäß der Fig. 3 ist daher der tatsächliche Fasenwinkel β um etwa 10° größer als der Rohteil-Fasenwinkel α.

In einem folgenden Nachbearbeitungsschritt werden die einander gegenüberliegenden Reibflächen 3 mit Hilfe von Diamant-Werkzeugen geschliffen, um eine entsprechend plane Oberfläche zu erhalten. Die Oberfläche der Reibflächen wird dabei bis zu den strichpunktierten Linien gemäß der Fig. 4 abgetragen. Da die Anfasung der Körperkanten zwischen Reibflächen 3 und der Perforationsbohrung 5 bereits vor dem Silizierschritt erfolgt, kann erfindungsgemäß der Einsatz teurer Diamant-Werkzeuge bei der Anfasung vermieden und können anstelle dessen herkömmliche Werkzeuge bei der Bearbeitung im Rohzustand eingesetzt werden.

## Patentansprüche

1. Keramik-Bremsscheibe (1) für eine Scheibenbremse eines Fahrzeugs, mit stirnseitig gegenüberliegenden Reibflächen (3), in denen radiale Hohlräume (5) zur Kühlung der Bremsscheibe (1) eingearbeitet sind, **dadurch gekennzeichnet, dass** die Körperkanten zwischen den Hohlräumen (5) und den Reibflächen (3) der Bremsscheibe (1) mit einer Fase (7) angefast sind, und die Fase (7) der Körperkanten der Keramik-Bremsscheibe (1) mit einer Siliziumschicht (9) überzogen ist.

2. Bremsscheibe nach Anspruch 1, **dadurch gekennzeichnet, dass** die Anfasung der Körperkanten in einem Rohzustand der Bremsscheibe (1) vor einem Silizier-Herstellungsschritt zur Infiltrierung der Porenstruktur des Bremsscheiben-Rohteils mit Silizium erfolgt.

3. Bremsscheibe nach Anspruch 2, **dadurch gekennzeichnet, dass** die die Fase (7) überziehende Siliziumschicht (9) während des Silizierschrittes durch aus den Kapillaröffnungen des Bremsscheiben-Rohteils austretendes oder auf der Oberfläche des Bremsscheiben-Rohteils verbleibendes Silizium gebildet ist.

4. Bremsscheibe nach einem der vorhergehenden Ansprüche, **dadurch gekennzeichnet, dass** im silizierten Zustand die Senktiefe (s) der Fase (7) in einer Größenordnung von 0,5-5 mm liegt.

5. Bremsscheibe nach einem der vorhergehenden Ansprüche, **dadurch gekennzeichnet, dass** die Fase (7) zusammen mit der Reibfläche (3) der Bremsscheibe (1) einen Fasenwinkel (β) einschließt, der zwischen 65° und 30°, vorzugsweise 45° beträgt.

6. Bremsscheibe nach einem der vorhergehenden Ansprüche, **dadurch gekennzeichnet, dass** ein Rohteil-Fasenwinkel (α) bei einem Bremsscheiben-Rohteil in einer Größenordnung von etwa 8° - 15° kleiner als der Fasenwinkel (β) der fertig bearbeiteten Bremsscheibe (1) ist.

7. Bremsscheibe nach einem der vorhergehenden Ansprüche, **dadurch gekennzeichnet, dass** die Breite bzw. der Durchmesser (d) der Hohlräume (5) zwischen 2 mm und 10 mm beträgt, vorzugsweise 5-7 mm.

8. Bremsscheibe nach einem der vorhergehenden Ansprüche, **dadurch gekennzeichnet, dass** die Fase (7) im Seitenquerschnitt sich vorzugsweise linear ohne Krümmung erstreckt.

9. Verfahren zur Herstellung einer Keramik-Bremsscheibe (1), in deren stirnseitig gegenüberliegenden Reibflächen (3) Hohlräume (5) zur Kühlung der Bremsscheibe (1) eingearbeitet werden, wobei ein faserverstärktes Verbundkeramikmaterial zu einem Rohteil vorgeformt wird, die Porenstruktur des Rohteils in einem Silizierschritt mit Silizium infiltriert wird, und anschließend die Reibflächen (3) in einem Nachbearbeitungsschritt nachbearbeitet werden, wobei die Körperkanten zwischen den Hohlräumen (5) und den Reibflächen (3) mit einer Fase (7) angefast werden, und dass die Anfasung der Körperkanten der Bremsscheibe (1) vor dem Silizierschritt erfolgt.

## Claims

1. Ceramic brake disc (1) for a disc brake of a vehicle, having friction surfaces (3) which lie opposite one another at the end and in which radial hollow spaces (5) for cooling the brake disc (1) are incorporated, **characterized in that** the body edges between the hollow spaces (5) and the friction surfaces (3) of the brake disc (1) are chamfered with a chamfer (7), and the chamfer (7) of the body edges of the ceramic brake disc (1) is coated with a layer of silicon (9).

2. Brake disc according to Claim 1, **characterized in that** the body edges are chamfered in an unfinished state of the brake disc (1) before a siliconization production step for infiltrating the pore structure of the unfinished brake disc part with silicon.

3. Brake disc according to Claim 2, **characterized in that** the layer of silicon (9) which coats the chamfer (7) is formed, during the siliconization step, by silicon which escapes from the capillary openings of the unfinished brake disc part or remains on the surface of the unfinished brake disc part.

4. Brake disc according to one of the preceding claims, **characterized in that**, in the siliconized state, the countersink depth (s) of the chamfer (7) lies in an order of magnitude of 0.5-5 mm.

5. Brake disc according to one of the preceding claims, **characterized in that** the chamfer (7) includes a chamfer angle (β) together with the friction surface (3) of the brake disc (1) of between 65° and 30°, preferably of 45°.

6. Brake disc according to one of the preceding claims, **characterized in that** an unfinished part chamfer angle (α) in the case of an unfinished brake disc part is in an order of magnitude of about 8°-15° less than the chamfer angle (β) of the fully machined brake disc (1).

7. Brake disc according to one of the preceding claims, **characterized in that** the width or the diameter (d) of the hollow spaces (5) is between 2 mm and 10 mm, preferably 5-7 mm.

8. Brake disc according to one of the preceding claims, **characterized in that** the chamfer (7) preferably extends linearly without curvature in lateral cross section.

9. Method for manufacturing a ceramic brake disc (1), in the friction surfaces (3) of which, which lie opposite one another at the end, hollow spaces (5) for cooling the brake disc (1) are incorporated, wherein a fibre-reinforced composite ceramic material is preformed to give an unfinished part, the pore structure of the unfinished part is infiltrated with silicon in a siliconization step, and then the friction surfaces (3) are finished in a finishing step, wherein the body edges between the hollow spaces (5) and the friction surfaces (3) are chamfered with a chamfer (7), and wherein the body edges of the brake disc (1) are chamfered before the siliconization step.

## Revendications

1. Disque de frein (1) en céramique pour frein à disque de véhicule automobile, présentant des surfaces de friction (3) qui se font face frontalement et dans lesquelles des cavités radiales (5) sont ménagées pour refroidir le disque de frein (1),
**caractérisé en ce que**
les chants du corps entre les cavités (5) et les surfaces de friction (3) du disque de frein (1) sont dotés d'un chanfrein (7) et
**en ce que** le chanfrein (7) des chants du corps du disque de frein (1) en céramique est revêtu d'une couche de silicium (9).

2. Disque de frein selon la revendication 1, **caractérisé en ce que** le chanfreinage des chants du corps est réalisé sur le disque de frein (1) à l'état brut avant l'étape d'apport du silicium dans laquelle la structure poreuse de l'ébauche de disque de frein est imprégnée par du silicium.

3. Disque de frein selon la revendication 2, **caractérisé en ce que** la couche de silicium (9) qui recouvre le chanfrein (7) est formée pendant l'étape d'apport de silicium par le silicium qui sort des ouvertures capillaires de l'ébauche de disque de frein ou par le silicium qui reste à la surface de l'ébauche de disque de frein.

4. Disque de frein selon l'une des revendications précédentes, **caractérisé en ce qu'**après l'apport de silicium, la profondeur (s) d'enfoncement du chant (7) est de l'ordre de 0,5 à 5 mm.

5. Disque de frein selon l'une des revendications précédentes, **caractérisé en ce que** le chanfrein (7) forme avec la surface de friction (3) du disque de frein (1) un angle de chanfrein (β) compris entre 65° et 30° et de préférence de 45°.

6. Disque de frein en ce que l'angle (α) de chanfrein de l'ébauche de disque de frein est de l'ordre d'environ 8° à 15° plus petit que l'angle de chanfrein (β) du disque de frein (1) après son usinage.

7. Disque de frein en ce que la .largeur ou le diamètre (d) des cavités (5) sont compris entre 2 mm et 10 mm et de préférence entre 5 et 7 mm.

8. Disque de frein en ce que le chanfrein (7) s'étend de préférence linéairement et sans courbure dans une section transversale latérale.

9. Procédé de fabrication d'un disque de frein (1) en céramique dans lequel des cavités (5) de refroidissement du disque de frein (1) sont formées dans les surfaces de friction (3) qui se font face frontalement et dans lequel un matériau composite céramique renforcé de fibres est préfaçonné pour former une ébauche, la structure poreuse de l'ébauche étant imprégnée de silicium dans une étape d'apport de silicium et les surfaces de friction (3) étant ensuite usinées dans une étape d'usinage finale, les chants du corps entre les cavités (5) et les surfaces de friction (3) étant dotés d'un chanfrein (7) et le chanfreinage des chants du corps du disque de frein (1) ayant lieu avant l'étape d'apport de silicium.
